# EUROPÄISCHE PATENTSCHRIFT

(11) **EP 0 504 334 B1**
(45) Veröffentlichungstag und Bekanntmachung des Hinweises auf die Patenterteilung: **17.04.1996**
(21) Anmeldenummer: 91914825.4
(22) Anmeldetag: 26.08.1991
(51) Int. Cl.: B60T 8/48, B60T 8/42

(54) **BREMSANLAGE MIT EINER EINRICHTUNG ZUM REGELN SOWOHL DES BREMSSCHLUPFES ALS AUCH DES ANTRIEBSSCHLUPFES**
BRAKING INSTALLATION WITH A DEVICE FOR REGULATING BOTH THE BRAKING AND DRIVE SLIP
SYSTEME DE FREINAGE AVEC INSTALLATION SERVANT A LA FOIS POUR LA REGULATION DU GLISSEMENT AU FREINAGE ET POUR LA REGULATION DU GLISSEMENT A L'ENTRAINEMENT

(30) Priorität: 05.10.1990 DE 4031533; 18.03.1991 DE 4108756
(43) Veröffentlichungstag der Anmeldung: 23.09.1992
(73) Patentinhaber: ITT Automotive Europe GmbH, D-60488 Frankfurt (DE)
(72) Erfinder: BURGDORF, Jochen, D-6050 Offenbach-Rumpenheim (DE); REINARTZ, Hans-Dieter, D-6000 Frankfurt am Main 50 (DE); STEFFES, Helmut, D-6234 Hattersheim 3 (DE); VOLZ, Peter, D-6100 Darmstadt (DE); MAAS, Joachim, D-6368 Bad-Vilbel (DE); DINKEL, Dieter, D-6239 Eppstein (DE); BECK, Erhard, D-6290 Weilburg (DE); RISCH, Stefan, D-6200 Wiesbaden (DE)
(86) Internationale Anmeldenummer: EP9101620
(87) Internationale Veröffentlichungsnummer: WO9205990

(56) Entgegenhaltungen:
- EP-A- 0 282 031
- DE-A- 3 813 145
- DE-A- 4 001 421
- DE-C- 3 439 408
- DE-C- 3 900 851
- PATENT ABSTRACTS OF JAPAN vol. 13, no. 133 (M-809)(3481) 4. April 1989 & JP-A- 63 301 157 (AISIN SEIKI CO. ) 8. Dezember 1988
- PATENT ABSTRACTS OF JAPAN vol. 13, no. 130 (M-808)(3478) 30. März 1989 & JP-A- 63 297 159 (AISIN SEIKI ) 5. Dezember 1988

## Beschreibung

Die Erfindung bezieht sich auf eine Bremsanlage gemäß dem Oberbegriff des Anspruchs 1.

Ausgangspunkt sind blockiergeschützte Bremsanlagen, die nach dem Rückförderprinzip, wie sie beispielsweise aus DE-A-3 021116 bekannt sind, arbeiten. Derartige Bremsanlagen sind üblicherweise mit einer nicht selbstansaugenden Pumpe ausgerüstet, da in der Pumpe kein Vakuum gebildet werden darf, sobald der Niederdruckspeicher, aus dem die Pumpe fördert, erschöpft ist. Weiterhin soll vermieden werden, daß die Radbremse zu stark gelöst wird, d.h. daß sich der Bremsbelag von der Bremskammer bzw. Bremsscheibe entfernt. Zum Betreiben einer nicht selbstansaugenden Pumpe wird ein Vordruck benötigt, der vom Niederdruckspeicher erzeugt wird.

Möchte man eine blockiergeschützte Bremsanlage zur Antriebsschlupfregelung einsetzen, so muß die Anlage in der Lage sein, die Radbremsen zu befüllen, um einen Bremsdruck aufbauen zu können, der dem Antriebsmoment entgegenwirkt. Die Pumpe muß daher aus einem Druckmittelvorratsbehälter ansaugen. Dies setzt in der Regel eine selbstansaugende Pumpe voraus, da der Druckmittelvorratsbehälter keinen Vordruck aufweist.

In der Bremsanlage gemäß der genannten Offenlegungsschrift sind daher zwei Pumpen vorgesehen, die die verschiedenen Aufgaben erfüllen. Dabei liegt es auf der Hand, daß ein entsprechend kompliziertes Hilfsdruckversorgungssystem entsteht.

Es gibt auch Bremsanlagen, die mit einer Pumpe für beide Regelarten auskommen. Bei diesem sogenannten offenen Systemen wird das Druckmittel, das zur Verminderung des Radbremsdruckes aus den Radbremsen abgelassen wird, in einen Vorratsbehälter gebracht, wobei die Pumpe aus dem Vorratsbehälter, der mit einer ausreichenden Druckmittelmenge beschickt ist, ständig ansaugt und in einen geregelten Kreis fördert, von dem eine bestimmte Druckmittelmenge zur Radbremse abgezweigt wird, sobald eine Druckerhöhung notwendig wird. Diese Systeme beinhalten aber das Risiko, daß beim Versagen des Auslaßventils kein Bremsdruck mehr aufgebaut werden kann.

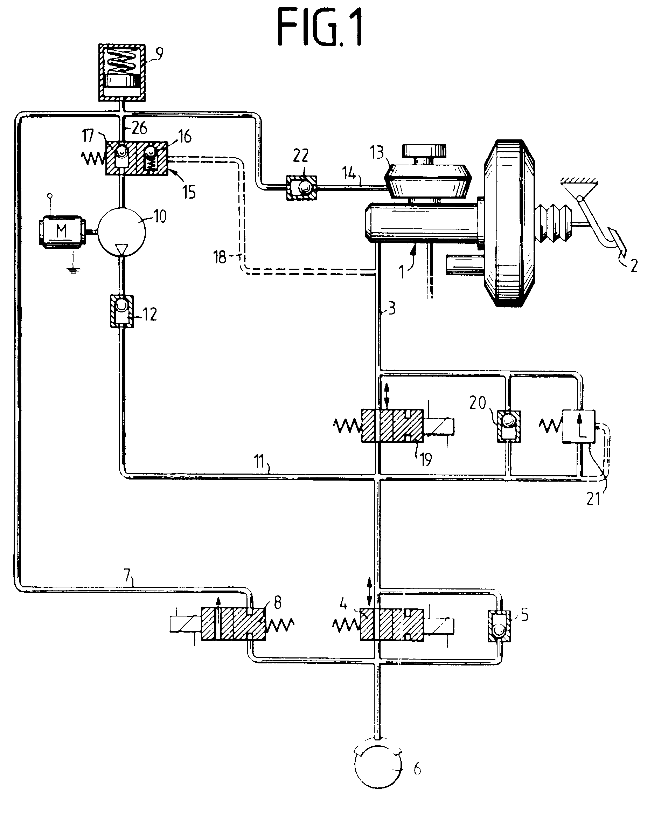

Eine Bremsanlage gemäß dem Oberbegriff des Anspruchs 1 ist aus der DE-C-3 439 408 bekannt. Die in Fig. 1 dargestellte Bremsanlage weist zwei Bremskreise auf, von denen einer die Radbremsen der angetriebenen Räder und der andere die Radbremsen der nicht angetriebenen Räder eine Kraftfahrzeuges umfaßt. Beide Bremskreise sind zur Bremsschlupfregelung nach dem Rückförderprinzip geeignet. Zusätzlich ist der die Radbremsen der angetriebenen Räder aufweisende Bremskreis mit einer Einrichtung zur Regelung des Antriebsschlupfes ausgerüstet. Hierzu ist die zugehörige Rückförderpumpe selbstansaugend ausgelegt und weist zwei Saugleitungen auf, von denen eine mit einem Niederdruckspeicher und die andere über ein Umschaltventil mit der Bremsleitung verbunden ist.

Über die mit der Bremsleitung verbundene Saugleitung wird zur Antriebsschlupfregelung bei unbetätigtem Bremspedal durch den Hauptzylinder hindurch aus dem Druckmittelvorratsbehälter Druckmittel angesaugt und durch die Pumpe in die Radbremsen der angetriebenen Räder verbracht. Um hier das Problem zu lösen, daß die selbstansaugende Pumpe bei entleertem Niederdruckspeicher keinen Unterdruck erzeugt, ist in die zum Niederdruckspeicher führende Saugleitung ein Rückschlagventil eingefügt, dessen Öffnungsdruck bei etwa 2 bar liegt. In der mit der Bremsleitung verbundenen Saugleitung hingegen, ist ein Rückschlagventil angeordnet, dessen Öffnungsdruck wesentlich niederiger ist, nämlich 0,2 bis 0,4 bar, damit ein leichtes Ansaugen von Druckmittel zur Antriebsschlupfregelung möglich ist. Durch die zwei separaten Saugleitungen benötigt die Pumpe des zur Antriebsschlupfregelung ausgestatteten Bremskreises auch zwei Druckmittelanschlüsse an ihrer Saugseite.

Die Erfindung beruht daher auf der Aufgabe eine Bremsanlage zu schaffen, die ein noch einfacheres Hilfsdruckversorgungssystem aufweist, allen Sicherheitsaspekten genügt und je Bremskreis mit einer Pumpe auskommt.

Die Aufgabe wird mit den Mitteln gelöst, die im kennzeichnenden Teil des Anspruchs 1 genannt sind. Indem die Rückschlagventile in Reihe geschaltet werden, reicht ein einziger Druckmittelanschluß an der Saugseite der Pumpe aus, um Antriebsschlupfregelung und Bremsschlupfregelung im geschlossenen System auf sichere Weise mit nur einer Pumpe pro Bremskreis zu verwirklichen. Dabei genügt es, daß der Öffnungsdruck des ersten Ventils größer ist als der Atmosphärendruck.

Wird nämlich die Bremskraft vollständig abgebaut, so herrscht in der Radbremse und in der Rücklaufleitung der Atmosphärendruck von ca. 1 bar. Ist der Öffnunsdruck des ersten Ventils größer als ca. 1 bar, kann die Pumpe nicht ansaugen, auch wenn in ihm ein Vakuum gebildet wird. Auf diese Weise wird vermieden, daß sich die Bremsbeläge von der Bremstrommel bzw. Bremsscheibe lösen.

Weitere Ausgestaltungsmöglichkeiten der Erfindung sind in den Unteransprüchen benannt.

Wichtig ist, daß der Öffnungsdruck des ersten Rückschlagventils kleiner ist als der Vordruck des Niederdruckspeichers.

Befindet sich die Bremsanlage in einer Bremsschlupfregelung, so wird die Verbindungsleitung zum Druckmittelvorratsbehälter gesperrt und die Pumpe saugt über das erste Rückschlagventil aus dem Niederdruckspeicher an.

Die Sperrung kann auf verschiedene Weise realisiert werden, eine Möglichkeit besteht darin, eine Selbstsperrung durch ein Rückschlagventil vorzusehen, andere Möglichkeiten beinhalten ein Umschaltventil, das entweder vom Pumpendruck oder vom Hauptzylinderdruck betätigt wird. Möglich ist auch die Betätigung durch den Druck im Niederdruckspeicher, auch eine mechanische Betätigung durch den Kolben des Niederdruckspeichers wäre denkbar.

Besonders einfach wird die Konstruktion, wenn beide Rückschlagventile hintereinander geschaltet werden, wobei zwischen den Ventilen eine sperrbare Verbindungsleitung zum Druckmittelvorratsbehälter abzweigt. Das Sperrventil kann in vorteilhafter Weise mit dem Trennventil kombiniert werden.

Um die Bremsanlage so darzustellen, daß sie wenig Raum beansprucht, einfach zu montieren und preiswert in der Herstellung ist, wird vorgeschlagen, in einem Ventilblock lediglich die Magnetventile der Bremsanlage unterzubringen, ggf. mit parallelgeschalteten Rückschlagventilen.

Dadurch ergibt sich der Vorteil, die Gehäuseeinheit - im folgenden ASR-Adapter genannt -, in welcher die Rückschlagventile und das 2/2-Wege ventil untergebracht sind, sehr kompakt gefertigt werden kann und in ein Pumpenaggregat einer blockiergeschützten Bremsanlage, die nach dem Rückförderprinzip, jedoch mit selbstansaugender Pumpe arbeitet, dort eingebaut werden kann wo sich bei alleiniger Blockierfunktion ein einzelnes Saugventil befindet. Vorzugsweise wird der ASR-Adapter genau wie das Saugventil eingeschraubt. Ein ursprünglich vorhandener Anschluß der Druckleitung der Pumpe an den Hauptbremszylinder wird verschlossen oder schon bei der Fertigung weggelassen.

Bei Ersatz eines Ventilblocks, der im wesentlichen nur die Einlaß- und Auslaßventile enthält, durch einen Ventilblock, der zusätzlich noch die Trennventile umfaßt und der für andere Bremsanlagen mit Antriebsschlupfregelung schon gebaut wird, erhält man mit wenigen Neuerungen eine preiswerte kompakte Bremsanlage mit Bremsschlupf- und Antriebsschlupfregelung.

Im folgenden soll anhand von 4 Figuren der Erfindungsgedanke näher erläutert werden.

Zunächst sei auf die Figur 1 Bezug genommen.

Die Bremsanlage besteht aus einem Hauptbremszylinder 1, der in bekannter Weise mittels eines Pedals 2 unter Druck gesetzt werden kann. Dem Hauptbremszylinder 1 ist ein Druckmittelvorratsbehälter 13, zugeordnet, der bei nichtbetätigtem Pedal mit den Kammern des Hauptbremszylinders 1 in Druckmittelverbindung steht.

Eine Radbremse 6 ist mit dem Hauptbremszylinder 1 mittels einer Bremsleitung 3 verbunden. Die Radbremse 6 gehört zu einem Rad, das vom Fahrzeugmotor angetrieben wird. In die Bremsleitung 3 ist ein elektromagnetisch betätigbares Einlaßventil 4 eingefügt, das in seiner Grundstellung die Bremsleitung offenhält und sie in seiner Schaltstellung sperrt. Die Schaltstellung liegt vor, wenn eine Spannung an die Magnetspulen angelegt wird. Parallel zum Einlaßventil 4 ist ein Rückschlagventil 5 geschaltet, das zur Radbremse 6 hin sperrt. Die Radbremse 6 steht weiterhin über eine Rücklaufleitung 7 mit einem Niederdruckspeicher 9 in Verbindung. In diese Leitung ist ein Auslaßventil 8 eingefügt, das ebenfalls elektromagnetisch betätigt wird und in seiner Grundstellung die Rücklaufleitung sperrt. Mit Anlegen einer Spannung an die Betätigungsspulen gibt das Ventil die Rücklaufleitung frei.

Der Niederdruckspeicher 9 besteht aus einem Kolben, der einen Speicherraum begrenzt und der mittels einer Feder unter leichter Vorspannung steht. Das Aufnahmevolumen des Speichers ist begrenzt.

Eine Pumpe 10 fördert über eine Druckleitung 11 in die Bremsleitung 3 oberhalb des Einlaßventils 4. Der Pumpe ist ein Rückschlagventil (Druckventil 12) nachgeschaltet. Bei der Pumpe handelt es sich um eine selbstansaugende Pumpe, z.B. eine Hubkolbenpumpe deren Kolben an dem Antriebsexzenter angekoppelt ist, oder mittels einer Feder in ständiger Anlage an den Exzenter gehalten wird.

Die Saugseite der Pumpe steht über eine Saugleitung 26 mit dem Niederdruckspeicher 9 in Verbindung. Eine Verbindungsleitung 14 verbindet den Druckmittelvorratsbehälter 13 mit dem Niederdruckspeicher 9. In diese Verbindungsleitung 14 ist ein Rückschlagventil 22 angeordnet, das zum Vorratsbehälter 13 hin sperrt. Die Saugleitung 26 weist ein schaltbares Saugventil 15 auf, das zwei Schaltstellungen aufweist. In der ersten Schaltstellung ist ein erstes Rückschlagventil 16 wirksam, das ein Öffnungsdruck von ca. 1,5 bar aufweist, also auf jeden Fall größer als der normalerweise auftretende Atmosphärendruck. In der zweiten Schaltstellung ist ein Rückschlagventil vorgesehen, das ein Öffnungsdruck von ca. 0,2 bar aufweist. Beide Rückschlagventile öffnen zur Pumpe hin. Eine mögliche Ansführungsform des Ventils wird in Figur 8 dargestellt und weiter unten beschrieben.

Der Niederdruckspeicher 9 weist je nach Füllung einen Vordruck zwischen 1,5 und 3 bar auf. Das Saugventil 15 wird über eine Steuerleitung 18 betätigt. Diese zweigt vom Hauptbremszylinder l ab. Ist die Steuerleitung drucklos, so befindet sich das Saugventil 15 in der zweiten Schaltstellung. Steht die Steuerleitung unter Druck, so schaltet das Saugventil 15 in die erste Schaltstellung.

In der Bremsleitung 3 ist weiterhin ein Trennventil 19 zwischen der Einmündung der Druckleitung 11 und dem Hauptbremszylinder 1 vorgesehen. Das Trennventil wird elektromagnetisch betätigt. In seiner Grundposition hält es die Bremsleitung 3 offen; in seiner Schaltstellung wird die Bremsleitung 3 gesperrt. Parallel zum Trennventil 19 ist ein Rückschlagventil 20 geschaltet, das zum Hauptbremszylinder 1 hin sperrt, weiterhin ist ein Überdruckventil 21 parallel geschaltet.

Die Bremsanlage arbeitet nach dem folgenden Schema:
Mit Betätigen des Pedals wird im Hauptbremszylinder 1 ein Druck aufgebaut, der sich über das offene Trennventil 19 und das offene Einlaßventil 4 zur Radbremse 6 hin fortpflanzt.

Der Radbremsdruck führt zu einer Radverzögerung und damit zu einer Fahrzeugverzögerung.

Wird nun mit Hilfe von Radsensoren, die nicht dargestellt sind, festgestellt, daß das Rad zu blockieren droht, so schaltet die Anlage in den Antiblockiermodus. Dazu wird der Antrieb der Pumpe eingeschaltet, das Einlaßventil 4 geschlossen und das Auslaßventil 8 geöffnet. Schon bei der nichtgeregelten Bremsung hat sich in der Steuerleitung 18 ein Druck aufgebaut, der dazu geführt hat, daß das Saugventil 15 in seine erste Schaltstellung geschaltet wurde. In der Saugleitung 26 ist somit das erste Rückschlagventil 16 mit einem Öffnungsdruck von ca. 1,5 bar wirksam.

Mit Öffnen des Anslaßventils 8 wird Druckmittel aus der Radbremse 6 über die Rücklaufleitung 7 in den Niederdruckspeicher 9 abgelassen. Dort baut sich entsprechend der Vorspannung der Feder ein Druck von etwas über 1,5 bar auf. Das Druckmittel kann nicht in den Vorratsbehälter 13 gelangen, da das Rückschlagventil 22 sperrt.

Der über dem Öffnungsdruck des ersten Rückschlagventils 16 liegende Druck des Niederdruckspeichers wird als Vordruck für die Pumpe 10 wirksam, so daß Druckmittel aus dem Niederdruckspeicher angesaugt wird und zurück in die Bremsleitung, bzw. in den Hauptbremszylinder 1 gelangt. (Das Trennventil 19 ist offen).

Zum erneuten Druckaufbau in der Radbremse kann dieses Druckmittel wieder aus dem Hauptbremszylinder 1 in den Radbremszylinder 6 gefördert werden.

Sollte während einer Bremsschlupfregelung der Niederdruckspeicher 9 geleert werden, so daß kein entsprechender Vordruck mehr aufgebaut wird, so kann die Pumpe kein Druckmittel aus dem Vorratsbehälter ansaugen, da der geringe Druck in der Verbindungsleitung 14, bzw. in der Saugleitung 26 nicht ausreicht den Öffnungsdruck des ersten Rückschlagventils 16 zu überwinden.

Es gelangt somit kein Druckmittel aus dem Vorratsbehälter 13 in den Bremskreis. Das System bleibt geschlossen.

Dies gilt auch dann, wenn das Auslaßventil 8 versagt, d.h. in seiner offenen Position verbleibt, obwohl die Spulen nicht mehr stromdurchflossen sind. Das Rückschlagventil 22 verhindert nun, daß bei einer Bremsbetätigung Druckmittel aus dem Hauptbremszylinder in den Vorratsbehälter 13 verdrängt wird. Auch bei defektem Auslaßventil kann somit ein Druck im Bremskreis aufgebaut werden.

Sobald aber eine Antriebsschlupfregelung notwendig wird, präsentiert sich die Bremsanlage als offenes System. Während einer Antriebsschlupfregelung erfolgt ein Bremsdruckaufbau unabhängig von der Betätigung der Anlage durch das Bremspedal 2. Dem Motormoment wird ein Bremsmoment entgegengesetzt, damit ein Durchdrehen des angetriebenen Rades verhindert wird.

Da das Bremspedal nicht betätigt ist, ist der Hauptzylinder und damit die Steuerleitung 18 drucklos. Das Saugventil 15 befindet sich in seiner zweiten Schaltposition, in der das zweite Rückschlagventil 17 wirksam ist.

Mit Beginn einer Antriebsschlupfregelung wird zunächst das Trennventil 19 umgeschaltet, so daß in der Druckleitung 11 ein Druck entsprechend dem Öffnungsdruck des Überdruckventils 21 eingestellt werden kann. Der Motor der Pumpe wird eingeschaltet, wobei die Pumpe 10 nun über das zweite Rückschlagventil 17 und das Rückschlagventil 22 aus dem Vorratsbehälter 13 Druckmittel ansaugt. Durch Schalten des Ein- und Auslaßventils 4 und 8 läßt sich nun der Druck in der Radbremse variieren und dem jeweiligen Drehverhalten des Rades anpassen.

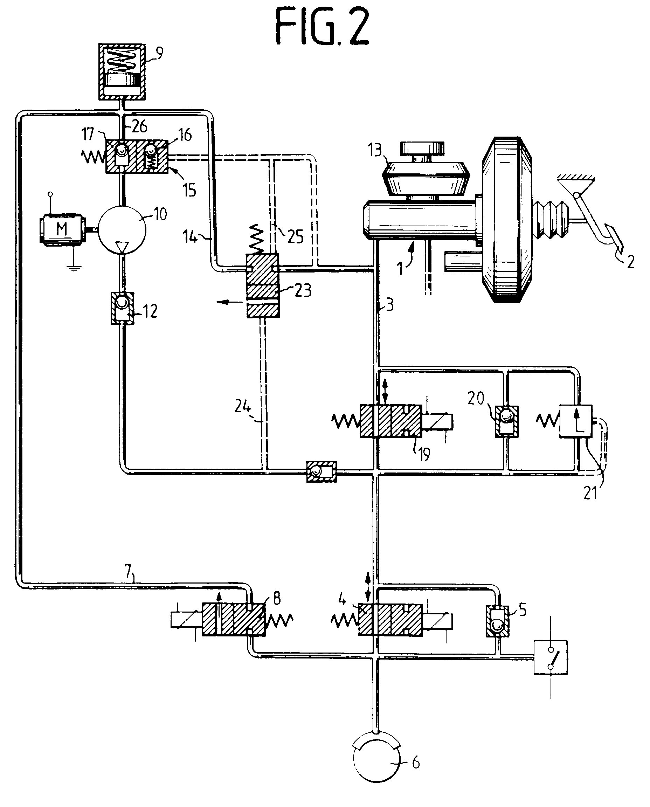

Die Ausführungsform nach Figur 2 unterscheidet sich von der Figur 1 nur darin, daß die Verbindungsleitung 14 nicht unmittelbar in den Vorratsbehälter 13 mündet, sondern in die Bremsleitung unmittelbar unterhalb des Hauptbremszylinders. Nun reicht es nicht mehr aus, die Leitung 14 durch ein Rückschlagventil zu trennen, sondern es muß ein 2/2-Wegeventil vorgesehen werden, daß die Leitung in beiden Richtungen sperrt. Das Ventil weist eine erste Steuerleitung 24 und eine zweite Steuerleitung 25 auf. In der ersten Steuerleitung 24 ist der Pumpendruck und in der zweiten Steuerleitung der Hauptzylinderdruck wirksam. Das Ventil 23 wird nur dann von der geschlossenen in die offene Position geschaltet, wenn der Pumpendruck den Hauptzylinderdruck deutlich übersteigt.

Während einer normalen, nicht geregelten Bremsung liegt kein Pumpendruck vor. Der Hauptzylinderdruck hält das Ventil 23 in eine die Verbindungsleitung 14 sperrenden Position.

Während einer Bremsschlupfregelung liegt sowohl ein Hauptzylinderdruck als auch ein Pumpendruck vor. Diese sind aber in etwa gleich groß, so daß auch in diesem Fall kein Umschalten des Ventils 23 erfolgt.

Erst dann, wenn eine Antriebsschlupfregelung eingeleitet wird, ist die Steuerleitung 25 drucklos, während die Steuerleitung 24 den Pumpendruck führt. Das Ventil 23 wird umgeschaltet, so daß die Pumpe über die Verbindungsleitung 14 und dem Hauptbremszylinder aus dem Vorratsbehälter 13 ansaugen kann. Die Verbindung zwischen dem Hauptbremszylinder 1 und dem Vorratsbehälter 19 ist dabei geöffnet.

Die Funktionsweise dieser Anlage folgt aus der Funktionsbeschreibung der Anlage, gemäß der Figur 1.

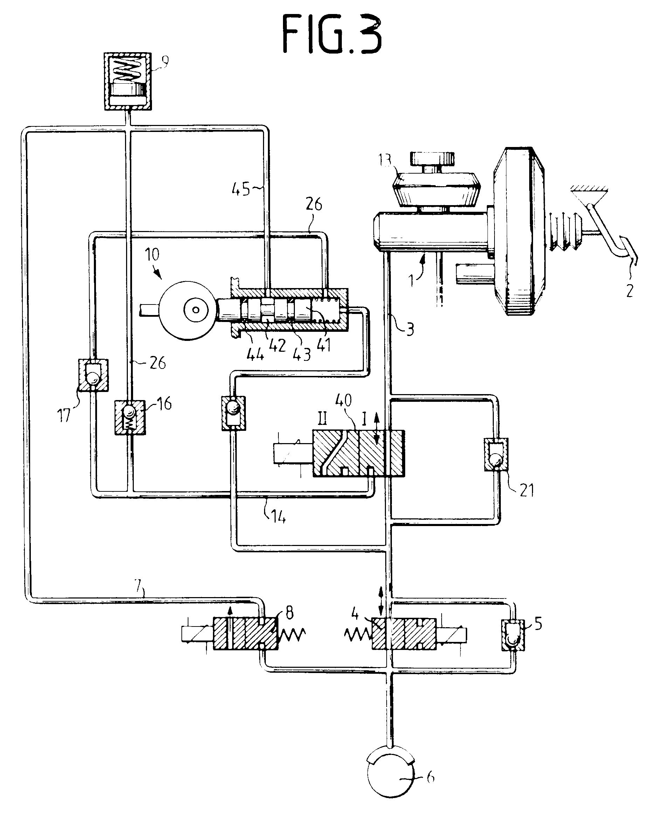

Desweiteren wird auf Figur 3 Bezug genommen.

Die Anlage ist weitgehend identisch aufgebaut zu den Anlagen gemäß der Figuren 1 und 2. Der Hauptbremszylinder 1 steht über eine Bremsleitung 3 mit der Radbremse 6 in Verbindung. In die Bremsleitung eingefügt ist ein Einlaßventil 4. Die Radbremse 6 steht über eine Rücklaufleitung 7, in die ein Auslaßventil 8 eingefügt ist, mit dem Niederdruckspeicher 9 in Verbindung. Die selbstansaugende Pumpe 10, hier detailliert dargestellt mit einem Exzenter und einem Pumpenkolben 41, fördert über eine Druckleitung 11 und ein Druckventil 12 in die Bremsleitung 3 oberhalb des Einlaßventils 4. Die Pumpe ist über eine Saugleitung 26 mit dem Niederdruckspeicher 9 verbunden. In diese Saugleitung 26 ist beginnend bei der Pumpe 10 zunächst das zweite Rückschlagventil 17 eingeschaltet und zwischen dem zweiten Rückschlagventil und dem Niederdruckspeicher ist das erste Rückschlagventil 16 eingefügt. Das erste Rückschlagventil hat, wie erläutert, einen Öffnungsdruck, der über Atmosphärendruck liegt.

Die Verbindungsleitung 14 zweigt von der Saugleitung 26 ab und zwar zwischen den beiden Rückschlagventilen 16 und 17. Die Saugleitung 26 führt zu einem Umschaltventil, das in die Bremsleitung 3 eingefügt ist. In der ersten Schaltstellung des Umschaltventils ist die Bremsleitung geöffnet und die Verbindungsleitung 14 gesperrt, während in der zweiten Schaltstellung des Umschaltventils 40 die Radbremse vom Hauptbremszylinder 1 abgekoppelt ist und die Verbindungsleitung 14 an den Hauptbremszylinder 1 anschließt und damit, falls das Pedal 2 nicht betätigt ist, an den Vorratsbehälter 13. Parallel zum Umschaltventil 40 ist ein Überdruckventil 21 geschaltet, das die Bremsleitungszweige oberhalb und unterhalb des Umschaltventils 40 miteinander verbindet.

Weiterhin weist der Kolben 41 der Pumpe 10 eine Besonderheit auf. In seinem mittleren Teil ist eine Ringnut ausgebildet, die durch eine erste Dichtung 43 zum Pumpenraum und durch eine zweite Dichtung 44 zur Atmosphäre hin abgedichtet ist. Über eine Sicherheitsleitung 45 stet die Ringnut stets mit dem Vorratsbehälter 9 in Verbindung.

Bei einer ungeregelten Bremsung besteht eine Verbindung zwischen dem Hauptbremszylinder 1 und der Radbremse und zwar über das Umschaltventil 40, das sich in seiner ersten Schaltposition befindet, und dem offenen Einlaßventil 4.

Bei einer Regelung des Bremsschlupfes wird der Pumpenantrieb aktiviert und das Ein- und Auslaßventil geschaltet. Das Umschaltventil 40 bleibt in der ersten Schaltstellung. Da die Verbindungsleitung 14 gesperrt ist, fördert die Pumpe 10 lediglich aus dem Niederdruckspeicher 9. Wenn der Druck in der Radbremse auf Atmosphärendruck sinkt, also keine Bremskraft mehr ausgeübt wird, ist die Pumpe nicht mehr in der Lage über das erste Ventil anzusaugen.

Während einer Antriebsschlupfregelung wird das Umschaltventil 40 geschaltet, so daß seine zweite Schaltstellung aktiviert ist. Die Saugseite der Pumpe steht über das zweite Rückschlagventil 17 und das ungeschaltete Ventil 40 mit dem Druckmittelvorratsbehälter 13 in Verbindung und kann nun über das zweite Ventil Druckmittel ansaugen.

Durch die doppelte Abdichtung des Pumpenkolbens 41 wird die Gefahr vermindert, daß Luft in das System eindringt, falls in der Pumpe ein Vakuum gebildet wird.

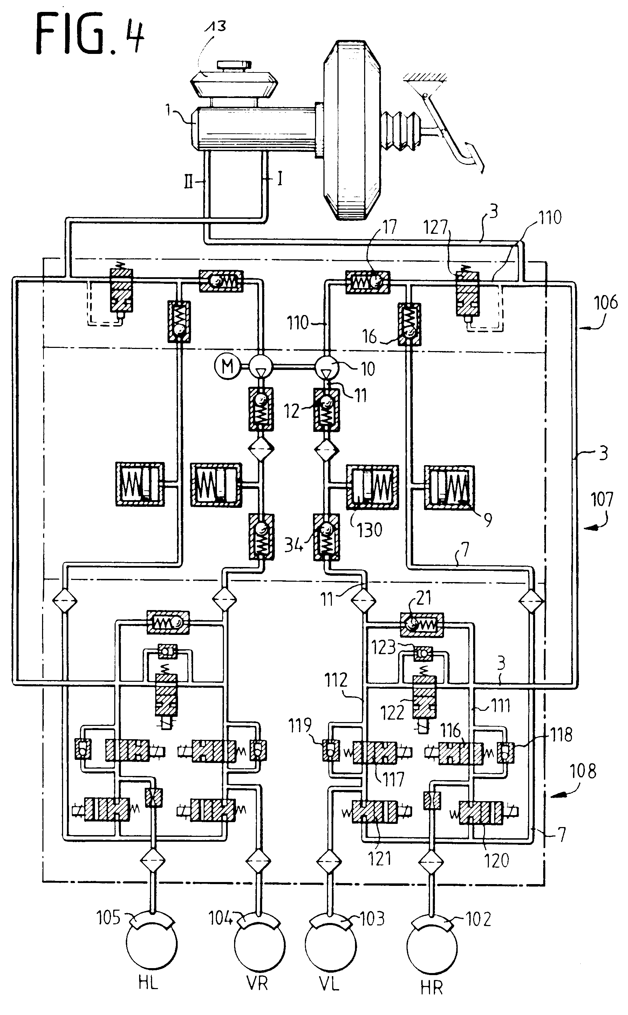

Die in Figur 4 dargestellte Bremsanlage besitzt zwei Bremskreise I und II mit diagonaler Zuordnung der Radbremsen für ein Fahrzeug mit Vorderachsantrieb. Der Aufbau der beiden Bremskreise I und II ist völlig analog, so daß die folgende Beschreibung eines Bremskreises ebenso auf den anderen zutrifft.

Die zwischen dem Hauptbremszylinder 1 und den Radbremsen 102,103,104 und 105 zur Schlupfregelung benötigten hydraulischen Funktionselemente sind in drei Gehäuseeinheiten 106,107 und 108 angeordnet, welche in der Zeichnung strichpunktiert angedeutet sind.

Vom Hauptbremszylinder 1 verläuft die Bremsleitung 3 zum ASR-Adapter 106, in welchem die Niederdruckleitung 110 an die Bremsleitung 3 angeschlossen ist. Die Bremsleitung 3 führt dann außerhalb der Gehäuseeinheiten 106,107 und 108 zum Ventilblock 108, wo sie über die Zweigleitungen 111 und 112 mit den Radbremsen 102 und 103 in Verbindung steht. Von diesen für die Rücklaufleitung 7 durch den Ventilblock 108 und das Pumpenaggregat 107 zum ASR-Adapter 106, wo sie in die Niederdruckleitung 110 mündet. Die Niederdruckleitung 110 verläuft von ihrem Anschluß an die Bremsleitung 3 durch den ASR-Adapter 106 in den Pumpenblock 107 zur Saugseite der selbstansaugenden Pumpe 10, die in die Druckleitung 11 fördert. Von der Pumpe 10 führt die Druckleitung 11 in den Ventilblock 108, wo sie in die Bremsleitung 3 einmündet.

In der Zweigleitung 111 von der Bremsleitung 3 zur rechten Hinterradbremse 102 sowie in der Zweigleitung 112 von der Bremsleitung 3 zur linken vorderradbremse 103 befindet sich je ein elektromagnetisch betätigtes, stromlos offenes Einlaßventil 116 bzw. 117 mit parallel geschaltetem Rückschlagventil 118 bzw. 119, wobei die Rückschlagventile verhindern, daß in den Radbremsen 102 und 103 Druck eingesperrt wird. Um im Falle einer Antriebsschlupfregelung die Bremse 102 der hinteren, nicht angetriebenen Achse von der Bremse 103 der vorderen, angetriebenen Achse zu trennen, ist in die Bremsleitung 3 zwischen die Anschlüsse der Zweigleitungen 111 und 112 eine elektromagnetisch betätigtes, stromlos offenes Trennventil 122 eingefügt, wobei ein parallel geschaltetes Rückschlagventil 123 ein pedalbetätigtes Einbremsen auch bei geschlossenem Trennventil 122 ermöglicht.

Zwischen den Radbremsen 102 und 103 und der Rücklaufleitung 7 ist jeweils ein elektromagnetisch betätigtes, stromlos geschlossenes Auslaßventil 120 bzw. 121 angeordnet. Die Rücklaufleitung weist im Pumpenaggregat 107 einen Anschluß zum Niederdruckspeicher 9 und im ASR-Adapter 106 das zweite Rückschlagventil 16 auf, dessen Vordruck hier 1,3 bar beträgt. Das erste Rückschlagventil 17, das im ASR-Adapter 106 in der Niederdruckleitung 110 zwischen der Saugseite der Pumpe 10 und der Saugseite der Einmündung der Rücklaufleitung 7 angeordnet ist, öffnet dagegen schon bei einer Druckdifferenz von 0,2 bar. Prinzipiell sollte die Summe der Vordrücke der beiden Rückschlagventile 16 und 17 immer über den Atmosphärendruck liegen, um zu verhindern, daß in den Radbremsen bei geöffneten Auslaßventilen 120 und 121 ein Unterdruck entsteht.

Zwischen der Einmündung der Rücklaufleitung 7 und dem Anschluß der Niederdruckleitung 110 an die Bremsleitung 3 ist im ASR-Adapter 106 in der Niederdruckleitung 110 ein in der Grundstellung offenes, vom Hauptbremszylinderdruck sperrbares hydraulisches 2/2-Wegeventil vorgesehen, das in anderen Ausführungen auch durch ein Magnetventil ersetzt werden kann.

In der Druckleitung sind der Pumpe 10 im Pumpenaggregat 107 zwei Druckventile 12 und 34 nachgeschaltet, zwischen denen der Dämpfungsspeicher 130 angeordnet ist, welcher Druckstöße auffängt. Der Vordruck des ersten Druckventils 12 liegt bei etwa 10 bar, während der des zweiten Druckventils 34 etwa 0,2 bar beträgt.

Schließlich ist im Ventilblock die Druckleitung 11 über das Überdruckventil 21 mit der Bremsleitung 3 verbunden. Der Vordruck dieses Überdruckventils 21 liegt weit über dem höchsten vorgesehenen Bremsdruck und dient als reine Sicherheitseinrichtung zur Entlastung der Druckleitung 11 für den Fall, daß die Pumpe bei geschlossenem Trennventil 122 einen zu hohen Druck aufbaut.

Die Funktionsweise der Bremsanlage ist folgende: Bei einer Normalbremsung pflanzt sich der im Hauptzylinder 1 aufgebaute Druck durch die Bremsleitung 3 in die Zweigleitung 111 und über das Trennventil 122 in die Zweigleitung 112 sowie über die Einlaßventile 116 und 117 in die Zylinder der Radbremsen 102 und 103 fort. Dem Druck in der Bremsleitung 3 schließt das hydraulische 2/2-Wegeventil 127. Bei Beendigung der Bremsbetätigung baut sich der Druck in den Radzylindern auf denselben Weg ab.

Wenn während einer Bremsbetätigung das gebremste Rad zu blockieren droht, schließt sich kurz das entsprechende Einlaßventil 116 oder 117, das zugehörige Auslaßventil 120 oder 121 öffnet sich und der Druck entweicht aus dem Radzylinder durch die Rücklaufleitung 7 in den Niederdruckspeicher 9. Die Pumpe 11 fördert das Druckmittel über die Rückschlagventile 16 und 10 aus dem Niederdruckspeicher 9 durch die Druckleitung 11 in die Radbremsen 102 und 103. Dabei wird der Pumpendruck vom Hauptbremszylinderdruck gesteuert. Während dieser Vorgänge bleibt das Trennventil 122 stets geöffnet.

In einer Antriebsschlupfregelphase steht kein Druck vom Hauptbremszylinder 1 an, so daß das 2/2-Wegeventil 127 offen bleibt. Die Pumpe 11 saugt aus dem Hauptbremszylinder 1 an und fördert in die Druckleitung 11. Das Trennventil 122 wird geschlossen, so daß nur in der Radbremse 103 des angetriebenen Vorderrades Druck aufgebaut wird.

Bei Beendigung der Antriebsschlupfregelung hört die Pumpe 115 auf zu fördern, und das Trennventil 122 sowie ggf. das Auslaßventil 121 werden geöffnet, so daß das Druckmittel in den Hauptbremszylinder 1 zurückfließen kann.

### Bezugszeichenliste

- 1: Hauptbremszylinder
- 2: Pedal
- 3: Bremsleitung
- 4: Einlaßventil
- 5: Rückschlagventil
- 6: Radbremse
- 7: Rücklaufleitung
- 8: Auslaßventil
- 9: Niederdruckspeicher
- 10: Pumpe
- 11: Druckleitung
- 12: Druckventil
- 13: Druckmittelvorratsbehälter
- 14: Verbindungsleitung
- 15: Saugventil
- 16: erstes Rückschlagventil
- 17: zweites Rückschlagventil
- 18: Steuerleitung
- 19: Trennventil
- 20: Rückschlagventil
- 21: Überdruckventil
- 22: Rückschlagventil
- 23: Sperrventil
- 24: erste Steuerleitung
- 25: zweite Steuerleitung
- 26: Saugleitung
- 31: Steuerleitung
- 32: Steuerleitung
- 33: Hochdruckspeicher
- 34: Rückschlagventil
- 35: Rückschlagventil
- 36: Rückschlagventil
- 37: Nebenleitung
- 38: Trennventil
- 40: Umschaltventil
- 41: Pumpenkolben
- 42: Ringnut
- 43: Dichtung
- 44: Dichtung
- 45: Sicherheitsleitung
- 46: Sperrventil
- 50: ASR-Speicher
- 51: Schalter
- 52: Zuschaltventil
- 59: Ventilsitz
- 60: Ventilkörper
- 61: Schaft
- 62: Kolben
- 63: Einlaßkammer
- 64: Steuerkammer
- 65: Steuerfeder
- 66: Kragen
- 67: Anschlagring
- 68: Gummiring
- 69: Anschlagfläche
- 70: Kragen
- 71: Ventilfeder
- 72: Pumpenanschluß
- 80: Ventilsitz
- 81: Hülse
- 82: Steuerraum
- 83: Ventilkugel
- 84: Ventilfeder
- 85: Rückstellfeder
- 102: Radbremse
- 103: Radbremse
- 104: Radbremse
- 105: Radbremse
- 106: ASR-Adapter
- 107: Pumpenaggregat
- 108: Ventilblock
- 110: Niederdruckleitung
- 111: Zweigleitung
- 112: Zweigleitung
- 116: Einlaßventil
- 117: Einlaßventil
- 118: Rückschlagventil
- 119: Rückschlagventil
- 120: Auslaßventil
- 121: Auslaßventil
- 122: Trennventil
- 123: Rückschlagventil
- 127: 2/2 Wegeventil
- 130: Dämpfungsspeicher

## Patentansprüche

1. Bremsanlage mit einer Einrichtung zum Regeln sowohl des Bremsschlupfes als auch des Antriebsschlupfes, bestehend aus einem Hauptbremszylinder (1),
mindestens einem Radbremszylinder (6,103), der über eine Bremsleitung (3,112) mit dem Hauptbremszylinder (1) verbunden ist und zu einem angetriebenen Rad gehört,
einer Pumpe (10), die mit ihrer Saugseite sowohl mit einem Niederdruckspeicher (9) als auch mit einem Druckmittelvorratsbehälter (13) verbunden ist und mit ihrer Druckseite über eine Druckleitung (11,112) in die Bremsleitung (3,112) einmündet,
einem Einlaßventil (4,117) in der Bremsleitung (3,112) zwischen dem Einmündungspunkt der Druckleitung (11) und dem Radbremszylinder (6,103),
einem Auslaßventil (8,121) in einer Rücklaufleitung (7) zwischen dem Radbremszylinder (6,103) und dem Niederdruckspeicher (9),
einem Trennventil (19,122) in der Bremsleitung (3) zwischen dem Einmündungspunkt der Druckleitung (11) und dem Hauptbremszylinder (1), wobei in der Verbindung der Saugseite der Pumpe (10) mit dem Niederdruckspeicher (9) ein erstes Rückschlagventil (16) und in der Verbindung zwischen der Saugseite der Pumpe und dem Druckmittelvorratsbehälter (13) ein zweites Rückschlagventil (17) eingefügt ist und der Öffnungsdruck des ersten Rückschlagventils (16) größer ist als der Atmosphärendruck, dadurch **gekennzeichnet**,
daß in einer Saugleitung (26,110) zwischen der Saugseite der Pumpe (10) und dem Niederdruckspeicher (9) nacheinander das zweite Rückschlagventil (17) und das erste Rückschlagventil (16) geschaltet sind, wobei zwischen den Ventilen eine Leitung (14,110), zum Druckmittelvorratsbehälter (13) abzweigt.

2. Bremsanlage nach Anspruch 1, dadurch **gekennzeichnet**, daß das Trennventil (19,122) ein elektromagnetisch betätigtes Zweiwegeventil ist.

3. Bremsanlage nach Anspruch 2, dadurch **gekennzeichnet**, daß die Verbindungsleitung (14) zum Druckmittelvorratsbehälter (13) über ein Sperrventil (23,46,127) verfügt.

4. Bremsanlage nach Anspruch 2, dadurch **gekennzeichnet**, daß das Sperrventil (46,127) ein hydraulisch betätigtes, drucklos geöffnetes 2/2-Wegeventil ist.

## Claims

1. A brake system with a device for controlling both brake slip and traction slip, comprising:
a master brake cylinder (1),
at least one wheel brake cylinder (6, 103) which is connected by way of a brake line (3, 112) to the master brake cylinder (1) and is associated with a driven wheel,
a pump (10) having its suction side connected both to a low-pressure accumulator (9) and to a pressure-fluid supply reservoir (13) and having its pressure side terminating into the brake line (3, 112) through a pressure line (11, 112),
an inlet valve (4, 117) in the brake line (3, 112) between the orifice of the pressure line (11) and the wheel brake cylinder (6, 103),
an outlet valve (8, 121) in a return line (7) between the wheel brake cylinder (6, 103) and the low-pressure accumulator (9),
a separating valve (19, 122) in the brake line (3) between the orifice of the pressure line (11) and the master brake cylinder (1), and with a first non-return valve (16) being inserted in the connection between the suction side of the pump (10) and the low-pressure accumulator (9), while a second non-return valve (17) is inserted in the connection between the suction side of the pump and the pressure-fluid supply reservoir (13), and with the opening pressure of the first non-return valve (16) being in excess of the atmospheric pressure,
**characterized** in that the second non-return valve (17) and the first non-return valve (16) are connected in series in a suction line (26, 110) between the suction side of the pump (10) and the low-pressure accumulator (9), a line (14, 110) branching off between the valves and leading to the pressure-fluid supply reservoir (13).

2. A brake system as claimed in claim 1,
**characterized** in that the separating valve (19, 122) is an electromagnetically operated two-way valve.

3. A brake system as claimed in claim 2,
**characterized** in that the connecting line (14) leading to the pressure-fluid supply reservoir (13) is furnished with a closing valve (23, 46, 127).

4. A brake system as claimed in claim 2,
**characterized** in that the closing valve (46, 127) is a hydraulically operated two-way/two-position directional control valve which is open in its unpressurized state.

## Revendications

1. Système de freinage, comportant un dispositif de régulation aussi bien du glissement de freinage que du glissement d'entraînement, constitué :
- d'un maître-cylindre de frein (1).
- d'au moins un cylindre de frein de roue (6, 103), qui est relié au maître-cylindre de frein (1) par l'intermédiaire d'une conduite de frein (3, 112) et appartient à une roue motrice.
- d'une pompe (10), qui, par son côté d'aspiration, est reliée à la fois à un accumulateur à basse pression (9) et à un réservoir de stockage d'agent de pression (13) et, par son côté de refoulement, débouche dans la conduite de frein (3, 112) par l'intermédiaire d'une conduite de refoulement (11, 112).
- d'une valve d'entrée (4, 117), disposée dans la conduite de frein (3, 112) entre le point auquel la conduite de refoulement (11) débouche et le maître-cylindre de frein (6, 103),
- d'une valve de sortie (8, 121), disposée dans une conduite de retour (7) entre le cylindre de frein de roue (6, 103) et l'accumulateur à basse pression (9).
- et d'une valve d'isolement (19, 122) disposée dans la conduite de frein (3) entre le point auquel la conduite de refoulement (11) débouche et le maître-cylindre de frein (1), tandis qu'une première valve antiretour (16) est insérée dans la liaison entre le côté d'aspiration de la pompe (10) et l'accumulateur à basse pression (9) et qu'une seconde valve antiretour (17) est insérée dans la liaison entre le côté d'aspiration de la pompe et le réservoir de stockage d'agent de pression (13), la pression d'ouverture de la première valve antiretour (16) étant supérieure à la pression atmosphérique,
caractérisé en ce que la seconde valve antiretour (17) et la première valve antiretour (16) sont montées à la suite l'une de l'autre dans une conduite d'aspiration (26, 110) située entre le côté d'aspiration de la pompe (10) et l'accumulateur à basse pression (9), tandis qu'une conduite (14, 110) est montée en dérivation entre les valves et mène au réservoir de stockage d'agent de pression (13).

2. Système de freinage selon la revendication 1, caractérisé en ce que la valve d'isolement (19, 122) est une valve à 2 voies à actionnement électromagnétique.

3. Système de freinage selon la revendication 2, caractérisé en ce que la conduite de liaison (14) menant au réservoir de stockage d'agent de pression (13) comporte une valve de blocage (23, 46, 127).

4. Système de freinage selon la revendication 2, caractérisé en ce que la valve de blocage (46, 127) est une valve à 2 voies/2 positions à actionnement hydraulique et ouverte en l'absence de pression.
